# EUROPÄISCHE PATENTSCHRIFT

(11) **EP 3 275 846 B1**
(45) Veröffentlichungstag und Bekanntmachung des Hinweises auf die Patenterteilung: **02.01.2019**
(21) Anmeldenummer: 17180266.3
(22) Anmeldetag: 07.07.2017
(51) Int. Cl.: C03B 23/09, C03B 23/043

(54) **VERFAHREN ZUR LASERGESTÜTZTEN UMFORMUNG VON GLASKÖRPERN**
METHOD FOR LASER-ASSISTED FORMING OF GLASS BODIES
PROCÉDÉ DE DÉFORMATION LASER DE CORPS EN VERRE

(30) Priorität: 29.07.2016 DE 102016114104
(43) Veröffentlichungstag der Anmeldung: 31.01.2018
(73) Patentinhaber: SCHOTT AG, 55122 Mainz (DE)
(72) Erfinder: HUNZINGER, Bernhard, 55263 Wackernheim (DE); WASCHBÜSCH, Michael, 55278 Undenheim (DE); JUD, Xaver, 9217 Neukirch a. d. Thur (CH); SEGNER, Johannes, 9000 St. Gallen (CH)

(56) Entgegenhaltungen:
- DE-A1-102009 031 689
- US-A1- 2012 060 558
- US-A1- 2015 114 043

## Beschreibung

Die Erfindung betrifft ein Verfahren zum Umformen eines um seine Längsachse L rotierenden Glaskörpers.

Das Ausformen eines Schulterbereichs ist ein wesentlicher Verfahrensschritt bei der Herstellung von hohlkörperförmigen Glasprodukten wie pharmazeutischen Packmitteln aus Glas. Dies können beispielsweise Spritzen, Ampullen, Karpulen oder Fläschchen sein. Üblicherweise kommen hier Prozesse zum Einsatz, die zur Erwärmung des Glases mit fossilen Brennstoffen betriebene Brenner benutzen. Der übliche Ablauf der Formgebung umfasst dabei mehrere sukzessive Aufwärm- und Formgebungsschritte, mit welchen ausgehend von Rohrglas-Körpern die gewünschte Endgeometrie angenähert wird. Übliche Durchmesser dafür verwendeter Glasrohre liegen je nach herzustellendem Packmittel im Bereich von etwa 6 bis 40 Millimetern.

Vorrichtungen und Verfahren, bei welchen das Umformen mit Brennern in mehreren Schritten erfolgt, sind beispielsweise aus der DE 10 2005 038 764 B3 und der DE 10 2006 034 878 B3 bekannt. Bei solchen Verfahren ist ein wiederholter Wechsel von Erwärmungs- und Umformungsschritten notwendig, weil der umzuformende Glaskörper durch den Kontakt mit den Formwerkzeugen abkühlt. Solche Verfahren werden regelmäßig auf indexierenden Rundläufermaschinen realisiert, da derartige Vorrichtungen kostengünstig arbeiten und raumsparend aufgebaut sind. Beispielsweise sind Rundläufer mit 16 oder 32 Stationen bekannt. Aus der stationsweisen Aufteilung der Formgebungsprozesse ergibt sich allerdings eine Vielzahl störungsanfälliger Prozessparameter, die aufwändig zur Justage des Gesamtprozesses einzustellen sind.

Aufgrund der Vielzahl der einstellbaren Parameter sowie mangelnder Skalierbarkeit der Prozessführung ist der Einfluss des Anlagenbedieners von großer Bedeutung für die Qualität des Endprodukts, sowie auch der Leistungsfähigkeit des Herstellungsprozesses insgesamt.

Selbst wenn neben der vom Grundprinzip bereits vergleichsweise kostengünstigen Realisierung der Formgebung auf Rundläufermaschinen zusätzliche Investitionen in aufwändige Automatisierungsfunktionen vermieden werden können, steht die Produktion dennoch in einem starken Abhängigkeitsverhältnis zur Verfügbarkeit von erfahrenem und gut ausgebildetem Bedienpersonal. Damit ergibt sich im Hinblick auf die Herstellungskosten ein signifikanter Personalaufwand.

Störend auf den Verarbeitungsprozess können sich zudem auch sogenannte Einlaufphänomene auswirken. Diese Einlaufphänomene entstehen unter anderem durch Wärmedehnungen aufgrund der Aufheizung von Anlagenteilen durch die Brenner.

Ein weiteres Problem ergibt sich aufgrund der Komplexität der Prozessführung dahingehend, dass die Temperatur während der Formgebung nicht sehr genau zu steuern ist und es somit zu Qualitätsschwankungen der Produktion kommen kann.

DE 10 2010 045 094 B4 und DE 10 2012 101 948 A1 offenbaren ein Herstellungsverfahren für hohlkörperförmige Glasprodukte durch lasergestützte Heißformgebung. Das dort offenbarte Verfahren ermöglicht durch die Verwendung gezielt gesteuerter Laser zur Beheizung des umzuformenden Glaskörpers, dass sämtliche Prozessschritte für die Umformung in einem Schritt und damit beispielsweise an einer einzelnen Station eines Rundläufers ausgeführt werden können. Strikte Geometrieanforderungen, wie beispielsweise für pharmazeutische Packmittel, konnten mit diesem Verfahren allerdings nicht zuverlässig erreicht werden.

DE102009031689 A1, US2015114043 A1 und US2012060558 A1 lehren Verfahren zum Umformen eines um seine Längsachse rotierenden Glasrohrs mittels radialer und axialer Formwerkzeuge und einer Heizeinrichtung die einen Laser umfasst. Das Glas wird erst durch einen Brenner vorgeheizt und dann während der Umformung durch einen Laser. Die Umformung erfolgt durch gleichzeitige Zustellung der radialen und axialen Formwerkzeuge.

Der Erfindung liegt mithin die Aufgabe zugrunde, ein lasergestütztes Heißformgebungsverfahren für Glaskörper anzugeben, mit welchem bei mindestens gleichbleibender Qualität der hergestellten Glasprodukte der

Produktionsprozess stabilisiert werden kann. Zudem kann die Gefahr der Bildung von Stauchungsdefekten im Bereich der Schulter der Glasprodukte vermindert oder sogar vollständig ausgeschlossen werden.

Diese Aufgabe wird durch den Gegenstand des unabhängigen Anspruchs gelöst. Bevorzugte Weiterbildungen der Erfindung sind in den abhängigen Ansprüchen angegeben.

Bei der Erfindung handelt es sich um ein Verfahren zum Umformen eines um seine Längsachse L rotierenden Glaskörpers mittels einer Einrichtung zur Einstellung eines Temperaturprofils entlang der Längsachse L, die einen Laser umfasst, eines radialen Formwerkzeugs, das radial zur Längsachse L verfahrbar ist, eines axialen Formwerkzeugs, das axial zur Längsachse L verfahrbar ist sowie einer Rotationseinrichtung, mit der der Glaskörper rotiert werden kann. Es umfasst die folgenden Schritte in der angegeben Reihenfolge:
A. Einstellen eines ersten vordefinierten Temperaturprofils des Glaskörpers entlang seiner Längsachse L mittels der Einrichtung zur Einstellung eines Temperaturprofils,
B. Umformen des rotierenden Glaskörpers durch Zustellen des radialen Formwerkzeugs, so dass eine Schulter ausgebildet wird,
C. Einstellen eines zweiten vordefinierten Temperaturprofils des Glaskörpers entlang seiner Längsachse L mittels der Einrichtung zu Einstellung eines Temperaturprofils, so dass die Viskosität des Glases im Bereich der Schulter mindestens 10⁶ dPa s und höchstens 10¹³ dPa s beträgt und
D. Umformen des rotierenden Glaskörpers durch Zustellen des axialen Formwerkzeugs.

Falls das axiale Formwerkzeug einen Dorn und einen Fuß umfasst, kann der Dorn bereits vor dem Zustellen des radialen Werkzeugs teilweise in den Glaskörper eingeführt werden, in dem der Dorn und der Glaskörper relativ zueinander bewegt werden. Dabei ist jedoch darauf zu achten, dass der Fuß während der Umformung durch das radiale Werkzeug nicht mit dem Glaskörper in Kontakt kommt. Bevorzugt bleibt das radiale Formwerkzeug während der Schritte C und D in der zugestellten Position und wird erst nach Abschluss von Schritt D wieder in die Ausgangsposition zurückverfahren.

Die Viskosität des Glases ist je nach Viskositätsbereich gemäß der jeweils anzuwendenden Norm der Reihe DIN ISO 7884-2 bis DIN ISO 7884-4 zu bestimmen. Dabei gilt zumindest folgende Zuordnung: Viskositäten von 10³ dPa s und 10⁶ dPa s sind gemäß DIN ISO 7884-2, von 10^{7,6} dPa s gemäß DIN ISO 7884-3 und von 10¹³ dPa s gemäß DIN ISO 7884-4 zu bestimmen.

Das erfindungsgemäße Verfahren eignet sich zur Umformung von Körpern aus Glas, die eine Längsachse L aufweisen, die der Richtung ihrer größten Ausdehnung entspricht. Dies können allgemein zylinderförmige Glaskörper sein, deren Zylinderachse entlang der Längsachse L liegt, wie beispielsweise Glasrohre oder Glasstäbe. Auch Glaskörper mit davon abweichender Symmetrie oder unsymmetrische Glaskörper, wie beispielsweise solche, die in einem vorangegangen Verfahren formgebend bearbeitet wurden, können mit dem erfindungsgemäßen Verfahren umgeformt werden.

Bei Gläsern, die für die Umformung mittels des erfindungsgemäßen Verfahrens geeignet sind, handelt es sich beispielsweise um Borosilikatgläser oder Alumosilikatgläser. Solche Gläser kommen unter anderem bei der Herstellung von pharmazeutischen Packmitteln zum Einsatz. Besonders bevorzugt wird dabei alkaliarmes Borosilikatglas oder chemisch härtbares Alumosilikatglas verwendet.

Ein geeignetes alkaliarmes Borosilikatglas weist folgende Bestandteile in Gewichtsprozent auf:

| | |
|---|---|
| SiO₂ | 75 Gew%, |
| B₂O₃ | 10,5 Gew %, |
| Al₂O₃ | 5 Gew %, |
| Na₂O | 7 Gew %, |
| CaO | 1,5 Gew % |

sowie folgenden Zusammenhang zwischen Viskosität η und Temperatur T:
η = 10⁴ dPa s bei T = 1160 °C,
η = 10^{7,6} dPa s bei T = 785 °C,
η = 10¹³ dPa s bei T = 565 °C.

Unter dem Temperaturprofil eines Glaskörpers ist erfindungsgemäß der Verlauf der Temperatur auf dessen Oberfläche entlang seiner Längsachse L zu verstehen. Ein Temperaturprofil kann entweder homogen sein, das heißt keinen Temperaturgradienten entlang der Längsachse L aufweisen, oder inhomogen und somit unterschiedliche Temperaturen an verschiedenen Punkten auf der Oberfläche aufweisen. Derartige Temperaturprofile können mittels Pyrometern oder Wärmebildkameras gemessen werden.

Die Umformung findet erfindungsgemäß mit einem radialen und einem axialen Formwerkzeug statt. Diese Formwerkzeuge bewirken durch ein entsprechendes Zustellen eine plastische Deformation des Werkstücks. Im Speziellen wird ein Werkstück dabei durch den Kontakt mit dem Werkzeug gequetscht. Sowohl das radiale als auch das axiale Werkzeug können aus einer oder mehreren Komponenten bestehen, die relativ zueinander beweglich und gegebenenfalls auch verfahrbar sein können. Die Komponenten, die in Kontakt mit dem rotierenden Glaskörper stehen, können so ausgeführt sein, dass sie entweder über dessen Oberfläche gleiten oder über die Oberfläche abrollen.

Unter einem radialen Formwerkzeug ist dabei ein Werkzeug zu verstehen, das radial zur Längsachse L verfahrbar ist. Es bewirkt somit eine Umformung, nach der das Werkstück im umgeformten Bereich zumindest eine Verjüngung aufweist. Ein derartiges radiales Formwerkzeug besteht in der Regel zumindest aus zwei Komponenten, die von gegenüberliegenden Seiten relativ zum Glaskörper verfahrbar sind und dadurch eine Quetschung bewirken können. Je nach Ausbildung der Form des radialen Formwerkzeuges kann es bei der Umformung sowohl radiale als auch axiale Kräfte auf den Glaskörper ausüben.

Unter einem axialen Formwerkzeug ist ein Werkzeug zu verstehen, das axial zur Längsachse L verfahrbar ist. Ein axiales Werkzeug kann beispielsweise einen Dorn und einen Fuß umfassen, die auch relativ zueinander axial verfahrbar sein können. Je nach Ausbildung der Form des axialen Formwerkzeuges kann es bei der Umformung sowohl radiale als auch axiale Kräfte auf den Glaskörper ausüben.

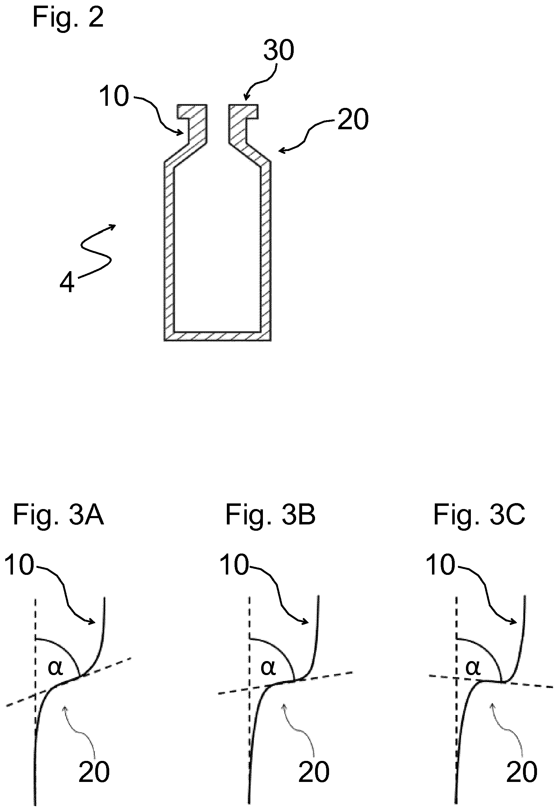

Unter dem Begriff Schulter ist erfindungsgemäß der Übergangsbereich zwischen einem durch Umformung verjüngten und einem nicht umgeformten Bereich eines Glaskörpers zu verstehen. Der Begriff Hals bezeichnet entsprechend den verjüngten Bereich selbst. Dies ist schematisch in Figur 2 dargestellt. Eine derartige Schulter kann näherungsweise durch einen Schulterwinkel beschrieben werden, der im Wesentlichen von der Breite des Schulterbereichs und dem Ausmaß der Verjüngung abhängt. Die Kontur eines Glaskörpers mit Schulter weist im Bereich der Schulter einen Wendepunkt im mathematischen Sinne auf. Der Schulterwinkel ergibt sich aus dem Winkel zwischen einer Tangente an der Außenwand des nicht umgeformten Bereichs des Glaskörpers und der Tangente im Wendepunkt. Dies wird in den Figuren 3A bis 3C verdeutlicht. Schulterwinkel gemäß dieser Definition können zwischen 0° und 180° liegen. Schulterwinkel von mehr als 90° können durch Stauchung des Halses in den nicht umgeformten Bereich hinein entstehen. Für pharmazeutische Packmittel werden beispielsweise in der Regel Schulterwinkel zwischen 30° und 90° angestrebt.

Erfindungsgemäß wird zum Einstellen eines vordefinierten Temperaturprofils des Glaskörpers eine Einrichtung verwendet, die einen Laser umfasst, der auf die Oberfläche des umzuformenden Glaskörpers gerichtet ist. Um ein kontrolliertes Einstellen eines Temperaturprofils entlang der Längsachse L zu ermöglichen, wird der Laser bevorzugt zumindest annähernd senkrecht zur Längsachse L auf den Glaskörper gerichtet. Der Laser muss darüber hinaus so gewählt werden, dass dessen Strahlungsenergie von dem Glaskörper über lineare oder mehrphotonische Absorption aufgenommen und in Wärme umgewandelt werden kann.

Das erfindungsgemäße Verfahren hat den Vorteil, dass durch eine sequentielle Abfolge der Umformung mittels radialem und axialem Formwerkzeug bei gezielt für jeden dieser Umformungsschritte eingestellten Temperaturprofilen des Glaskörpers das Prozessfenster für eine stabile Herstellung einer toleranzkonformen Geometrie des Glaskörpers stark erweitert wird. Besonders deutlich tritt dieser Effekt bei der Formung der Schulter von hohlkörperförmigen Glasprodukten auf, da hier das Glas bei der Umformung einer starken Streckung unterliegt, durch die die Wanddicke reduziert wird. Durch die weitestgehende Trennung von radialer Formung der Schulter und axialer Formung des Halses und einer gezielten Wahl der jeweiligen Temperaturprofile können unerwünschte Stauchungen im Schulterbereich und damit eine fehlerhafte Produktion gänzlich ausgeschlossen oder zumindest reduziert werden.

Der Produktionsprozess kann dadurch soweit stabilisiert werden, dass Masseschwankungen des Ausgangsmaterials keinen Einfluss auf die Formstabilität während der Umformung haben. Dies führt beispielsweise dazu, dass das bei der Herstellung von pharmazeutischen Packmitteln als Ausgangsmaterial verwendete Rohrglas, das in der Regel die Qualitätstoleranzen an Masseschwankungen gemäß einer der Normen DIN ISO 11040 für Spritzen, DIN ISO 13926 für Karpulen, DIN ISO 9187 für Ampullen oder DIN ISO 8362 für Fläschchen erfüllt, nicht nochmals vorsortiert werden muss, um einem Ausschuss in der Produktion vorzubeugen.

Eine bevorzugte Weiterbildung der Erfindung sieht vor, während den Verfahrensschritten B und/oder D, also der Umformung mittels des radialen und/oder des axialen Formwerkzeugs, den rotierenden Glaskörper wenigstens zeitweise mit der Laserstrahlung der Einrichtung zur Einstellung eines axialen Temperaturprofils zu bestrahlen. Hierdurch kann eine Abkühlung, beispielsweise durch den Kontakt mit dem Formwerkzeug, vermieden oder zumindest reduziert werden. Somit wird auch einer Abweichung von dem jeweils gewählten vordefinierten Temperaturprofil entgegengewirkt.

In einer weiteren bevorzugten Weiterbildung der Erfindung wird das erste vordefinierte Temperaturprofil so gewählt, dass der Glaskörper im erhitzten Zustand in einem Bereich von der Stirnseite des Glaskörpers bis mindestens über die Position der auszubildenden Schulter hinaus Temperaturen aufweist, so dass die Viskosität des Glases in diesem Bereich an jedem Punkt zwischen 10³ dPa s und 10^{7,6} dPa s beträgt und dahinter auf Raumtemperatur abfällt.

In einer weiteren bevorzugten Weiterbildung der Erfindung wird das zweite vordefinierte Temperaturprofil so gewählt, dass der Glaskörper im erhitzten Zustand zwischen Stirnseite und Schulter Temperaturen aufweist, so dass die Viskosität des Glases in diesem Bereich an jedem Punkt zwischen 10³ dPa s und 10^{7,6} dPa s, bevorzugt zwischen 10³ dPa s und 10⁶ dPa s beträgt und im Bereich der Schulter geringere Temperaturen aufweist, so dass die Viskosität des Glases im Bereich der Schulter mindestens 10⁶ dPa s und höchstens 10¹³ dPa s, bevorzugt mindestens 10^{7,6} dPa s und höchstens 10¹³ dPa s beträgt und dahinter auf Raumtemperatur abfällt. Durch eine solche Wahl des zweiten Temperaturprofils wird der Schulterbereich für die Formgebung durch das axiale Formwerkzeug stabilisiert. Die Auswirkung von Masseschwankungen des Glaskörpers aufgrund von Fertigungstoleranzen auf die weitere Formgebung wird durch diese Wahl des zweiten Temperaturprofils ebenfalls unterdrückt.

Gemäß einer weiteren bevorzugten Weiterbildung der Erfindung kann vor oder während der Formgebung das eingestellte Temperaturprofil entlang der Längsachse L des Glaskörpers gemessen werden und die Leistungseinbringung durch die Einrichtung zur Einstellung eines Temperaturprofils so geregelt werden, dass Abweichungen zwischen dem gemessenen und einem vordefinierten Temperaturprofil minimiert werden. Vorzugsweise wird dafür eine Temperatur-Messeinrichtung mit hoher lateraler Auflösung, wie beispielsweise eine Wärmebildkamera, eingesetzt. Eine derartige Regelung der Leistungseinbringung trägt zusätzlich zu einer Erhöhung der Prozessstabilität bei.

In einer weiteren bevorzugten Weiterbildung der Erfindung, umfasst das radiale Formwerkzeug ein Walzenpaar, welches so angeordnet ist, dass die Walzen des Walzenpaares auf der Oberfläche eines mittels der Rotationseinrichtung in Rotation versetzten Glaskörpers abrollen. Dabei kann ein zwischen den Walzen liegender Bereich des Glaskörpers von dem Laserlicht der Einrichtung zur Einstellung eines Temperaturprofils bestrahlt werden.

In einer weiteren bevorzugten Weiterbildung der Erfindung umfasst das axiale Formwerkzeug einen Formdorn und einen Fuß, wobei zumindest der Fuß axial verfahrbar ist. Formdorn und Fuß können beispielsweise aus Wolfram, Rhodium und/oder temperaturstabilen, keramischen Werkstoffen ausgebildet sein.

In einer weiteren bevorzugten Weiterbildung der Erfindung findet zwischen der Umformung des Glaskörpers durch Zustellung des radialen Formwerkzeugs in Schritt B und der Umformung durch das axiale Formwerkzeug in Schritt D, bevorzugt vor der Einstellung des zweiten vordefinierten Temperaturprofils in Schritt C, ein Abkühlschritt statt, der bevorzugt wenigstens 0,01 s und höchstens 5 s, mehr bevorzugt wenigstens 0,1 s und höchstens 0,5 s und am meisten bevorzugt zwischen 0,2 s und 0,3 s dauert. Während dieses Abkühlschritts kann die eingestrahlte Leistung des Lasers wenigstens derart reduziert werden, dass die Viskosität des Glases im in Schritt B ausgebildeten Schulterbereich nach dem Abkühlen einen Wert von wenigstens 10⁶ dPa s und höchstens 10¹³ dPa s aufweist.

In einer weiteren bevorzugten Weiterbildung der Erfindung finden die Verfahrensschritte A, B, C und D an derselben Maschinenstation, beispielsweise einer einzigen Station einer indexierenden Rundläufermaschine, statt. Bevorzugt kann dabei zwischen den Verfahrensschritten A, B, C und D auf eine translatorische Bewegung des Glaskörpers verzichtet werden. In diesem Sinne beinhaltet der Begriff der translatorischen Bewegung den Transport des Glaskörpers zwischen verschiedenen Maschinenstationen, im Speziellen zwischen den Stationen einer Rundläufermaschine, auch wenn sich der Glaskörper dabei auf einer Kreisbahn um die Drehachse der Rundläufermaschine bewegt.

Die Erfindung kann somit auch auf völlig neuartigen Designs von Umform-Vorrichtungen ausgeführt werden. Wie bereits oben erläutert, werden bisher Rundläufer mit 16 oder 32 Stationen eingesetzt. Der Formgebungsprozess wird stationsweise durchlaufen, wobei die endgültige Form in mehreren Schritten durch sequentiellen Einsatz von Formwerkzeugen erreicht wird. Zwischen den Umformungsschritten wird erwärmt, um die Temperaturabsenkung bei der Umformung auszugleichen. Da in einer vorteilhaften Weiterbildung des erfindungsgemäßen Verfahrens die Erwärmung während der Umformung stattfinden kann und so ein Temperaturabfall kompensierbar ist, kann die gesamte Heißumformung eines umzuformenden Abschnittes in einer einzelnen Station durchgeführt werden. Mit anderen Worten werden alle zur Umformung des Abschnitts eingesetzten Formwerkzeuge in einer Umformstation eingesetzt, wobei der Laserstrahl während der Umformung dabei den Glaskörper erwärmen kann, beziehungsweise das vorgesehene Temperaturprofil einstellen und aufrechterhalten kann.

Entsprechend kann das erfindungsgemäße Verfahren dann auch, ähnlich wie bei aus dem Stand der Technik bekannten Vorrichtungen, an mehreren Stationen gleichzeitig ausgeführt werden, wobei diese Stationen gleichartige Umformschritte durchführen. Auf diese Weise kann durch parallele, gleichartige Umformung der Durchsatz eines solchen Verfahrens gegenüber bekannten Verfahren erheblich gesteigert werden.

Selbst bei Ausführung an einer einzelnen Station ergibt sich gegenüber dem herkömmlichen Verfahren im Allgemeinen ein erheblicher Geschwindigkeitsvorteil. Bei dem herkömmlichen Verfahren liegt die benötigte Zeit für einen Umformungsschritt typischerweise in der Größenordnung von 2 Sekunden. Geht man bei der herkömmlichen Umformung von 4 Umformungs- und entsprechenden Zwischenerwärmungs-Schritten mit Brennern aus, so liegt die Gesamtdauer der Umformung bei etwa 20 Sekunden. Demgegenüber ist es mit der Erfindung möglich, die Umformungsdauer im Wesentlichen auf die Dauer weniger herkömmlicher Umformungsschritte zu begrenzen. Damit kann der Umformungsprozess erheblich beschleunigt werden. So beträgt die Zeit für eine Umformung eines Abschnittes des Glaskörpers, gerechnet ohne die Aufheizdauer vorzugsweise weniger als 15, besonders bevorzugt weniger als 10, insbesondere bevorzugt weniger als 5 Sekunden.

In einer weiteren vorteilhaften Weiterbildung kann zumindest für die Verfahrensschritte A und C, bevorzugt für die Verfahrensschritte A, B, C, und D derselbe Laser verwendet werden. Hierdurch entfallen Investitionskosten beim Aufbau einer entsprechenden Fertigungsanlage, da nicht mehrere teure Laser für unterschiedliche Verfahrensschritte angeschafft werden müssen. Das Verfahren weist in dieser vorteilhaften Weiterbildung demnach eine verbesserte Wirtschaftlichkeit auf.

Besonders bei der Verwendung des erfindungsgemäßen Verfahrens für die Herstellung von pharmazeutischen Packmitteln ist es vorteilhaft, wenn der umzuformende Glaskörper als Glasrohr ausgebildet ist.

Die Erfindung wird nachfolgend anhand von Ausführungsbeispielen und unter Bezugnahme auf die beigeschlossenen Figuren näher erläutert. Dabei bezeichnen gleiche Bezugszeichen in den Figuren gleiche oder entsprechende Elemente.
Fig. 1 Teile einer Vorrichtung zur Umformung von Glaskörpern.
Fig. 2 Schematische Darstellung eines umgeformten Glaskörpers mit ausgebildetem Hals und Schulter sowie einer Stirnseite.
Fig. 3A Sollkonfiguration sowie 3B und 3C Abweichungen des Schulterwinkels α eines umgeformten Glaskörpers durch Stauchung im Schulterbereich.
Fig. 4 Schematisches Diagramm eines ersten und eines zweiten Profils der eingestrahlten Laserleistung als Funktion der axialen Position x entlang eines Glaskörpers.

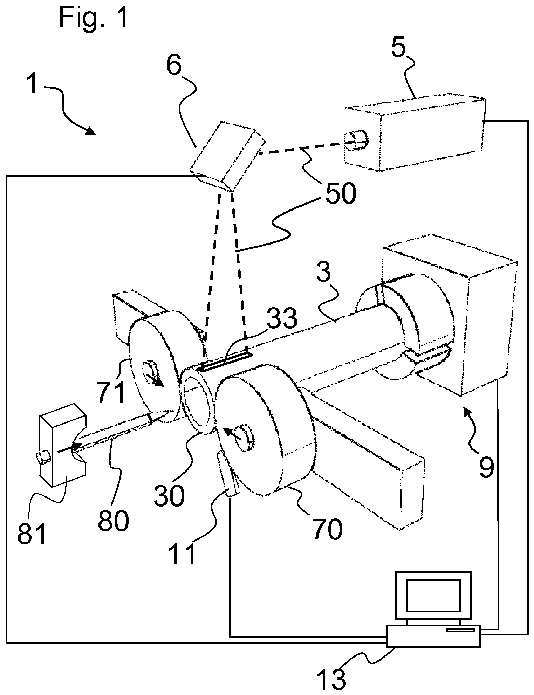

In Fig. 1 ist ein Ausführungsbeispiel einer Vorrichtung 1 zur Durchführung des erfindungsgemäßen Verfahrens dargestellt.

Die als Ganzes mit dem Bezugszeichen 1 bezeichnete Vorrichtung des in Fig. 1 gezeigten Beispiels ist zur Umformung von Glaskörpern 3 in Gestalt von Glasrohren ausgebildet. Im Speziellen wird die Vorrichtung zur Herstellung von pharmazeutischen Packmitteln, insbesondere Spritzenkörpern, Ampullen, Karpulen und Fläschchen verwendet wobei mit den in Fig. 1 gezeigten Elementen der Vorrichtung 1 der Schulter- und Halsbereich des Glaskörpers geformt wird.

Das Herstellen des Schulter- und Halsbereichs aus dem Glasrohr mittels Vorrichtung 1 basiert darauf, dass lokal ein Bereich eines Glasrohres 33 über dessen Erweichungspunkt erhitzt und mit zumindest einem Formwerkzeug wenigstens ein Abschnitt des erhitzten Endes umgeformt wird, wobei die Einrichtung zur lokalen Erhitzung einen Laser 5 umfasst, welcher Licht einer Wellenlänge emittiert, für welche das Glas des Glasrohres 3 höchstens teiltransparent ist, so dass das Licht zumindest teilweise im Glas absorbiert wird. Der Laserstrahl 50 wird dazu mittels einer steuerbaren Optik 6 auf das Glasrohr 3 gerichtet. Während des Umform-Prozesses werden das jeweilige Formwerkzeug und das Glasrohr 3 relativ zueinander mittels einer Rotationseinrichtung 9 rotiert. Im Allgemeinen ist es dabei zweckmäßig, wie auch im gezeigten Beispiel, das Glasrohr 3 mit Drehachse entlang der axialen Richtung des Glasrohres 3 zu rotieren. Denkbar wäre auch eine umgekehrte Konfiguration, bei welchem das Glasrohr festgehalten wird und das Formwerkzeug rotiert.

Das radiale Formwerkzeug umfasst bei dem in Fig. 1 gezeigten Beispiel ein Walzenpaar, dessen Walzen 70 und 71 bei Rotation des Glasrohres 3 auf dessen Oberfläche abrollen. Dabei wird das erhitzte Ende des Glasrohres komprimiert, indem die Walzen in radialer Richtung des Glasrohres 3 zugestellt werden. Die radiale Bewegung ist in Fig. 1 anhand von Pfeilen an den Drehachsen der Walzen 70 und 71 verdeutlicht.

Weiterhin sind ein Formdorn 80 und ein Fuß 81 als Bestandteil des axialen Formwerkzeugs vorgesehen. Formdorn 80 und Fuß 81 werden entlang der Rotationsachse des Glasrohres 3 verfahren, so dass der Formdorn 80 in die Öffnung des Glasrohres 3 an dessen Stirnseite 30 eingeführt wird. Diese axiale Bewegung ist in Fig. 1 anhand des Pfeils am Fuß 81 verdeutlicht. Der Formdorn 80 kann drehbar im Fuß 81 gelagert sein, um zusammen mit dem Glasrohr 3 zu rotieren. Ebenso möglich ist es, das rotierende Glas über den festgehaltenen Formdorn gleiten zu lassen. Um ein Anhaften zu vermeiden, kann hierzu, wie generell bei über die Glasoberfläche gleitenden Formwerkzeugen ein Trenn- oder Schmiermittel verwendet werden, welches die Reibung bei der Gleitbewegung herabsetzt.

Zwischen den Walzen 70 und 71 ist es möglich, den Laserstrahl 50 auf das Glasrohr zu richten, ohne, dass der Laserstrahl 50 durch das Formwerkzeug unterbrochen wird. Demgemäß ist das Formwerkzeug so ausgebildet, dass ein Oberflächenbereich des umzuformenden Abschnittes des Glasrohres nicht durch das Formwerkzeug abgedeckt wird, so dass mittels der dem Laser nachgeschalteten Optik 6 das Laserlicht bei der Umformung auf den nicht vom Formwerkzeug abgedeckten Bereich eingestrahlt wird. Im Speziellen wird vom Laserlicht ein zwischen den Walzen 70, 71 liegender Bereich 33 auf dem Umfang des Glasrohres 3 bestrahlt. Besonders vorteilhaft bei einer derartigen Anordnung ist, dass das Laserlicht die Formwerkzeuge nicht direkt erwärmt. Dies führt dazu, dass das Formwerkzeug trotz einer Erwärmung des Glaskörpers während der Umformung im Allgemeinen nicht stärker erwärmt wird als bei einem herkömmlichen Prozess mit vorangehender Erwärmung durch Brenner.

Eine Steuereinrichtung 13 steuert den Umformvorgang. Dabei werden mittels der Steuereinrichtung 13 der Laser 5, insbesondere dessen Leistung, sowie die Optik 6 so angesteuert, dass damit ein vordefiniertes Temperaturprofil des Glasrohres 3 entlang des bestrahlten Bereichs 33 eingestellt wird. Zumindest zeitweise wird das Glasrohr 3 während der Umformung durch das Laserlicht bestrahlt. Weiterhin wird auch die Bewegung der radialen und axialen Formwerkzeuge kontrolliert. Ebenfalls gesteuert werden kann auch die Rotationseinrichtung 9.

Die steuerbare Optik 6 der in Fig. 1 gezeigten Vorrichtung 1 dient dazu, den Laserstrahl 50 über den zu erwärmenden beziehungsweise umzuformenden Abschnitt des Glaskörpers zu bewegen und somit gezielt vordefinierte Temperaturprofile des Glaskörpers einzustellen und zu regeln. Die in den Glaskörper eingebrachte Leistung zur Erwärmung hängt dabei von der Geschwindigkeit ab, mit der der Laserstrahl über den zu erwärmenden Bereich bewegt wird. Da es mit der steuerbaren Optik 6 möglich ist, diese Geschwindigkeit gezielt lokal zu variieren und zusätzlich über die Steuereinrichtung 13 dabei die Leistung des Lasers 5 anzupassen, kann die in das Glas eingebrachte Leistung lokal sehr genau eingestellt werden. Da das Glasrohr 3 rotiert, während das Laserlicht eingestrahlt wird, verteilt sich die eingestrahlte Leistung in Umfangsrichtung auf dem Glasrohr, so dass ein zylinderförmiger Abschnitt, beziehungsweise unabhängig von der Form des Glaskörpers allgemein ein Abschnitt in axialer Richtung entlang der Drehachse erwärmt wird. Dieser Abschnitt hat eine Länge, die vorzugsweise mindestens so groß ist wie der umzuformende Abschnitt. Letzterer hat eine Länge, die im Wesentlichen durch die Breite des radialen Formwerkzeugs, bevorzugt des Walzenpaares, bestimmt wird.

Die steuerbare Optik 6 kann auf unterschiedliche Arten ausgeführt sein, beispielsweise als schwenk- oder rotierbarer Spiegel, Drehspiegel mit Spiegelfacetten oder als Spatial Light Modulator (SLM). Ebenso denkbar wäre auch eine Konfiguration, bei welcher die Optik fixiert und der Laser bewegt wird, beispielsweise mit einem geeigneten Galvanometer, Schwenk- oder Translationsantrieb.

Die in Fig. 1 dargestellte Vorrichtung bietet den Vorteil, dass die Laserstrahlung örtlich exakt und fein einstell- und regelbar ist, so dass für jeden Verfahrensschritt ein optimiertes vordefiniertes Temperaturprofil entlang des erwärmten Abschnitts des Glaskörpers eingestellt wird.

Als Laser 5 sind im Allgemeinen Infrarotlaser mit Wellenlängen zwischen 780 nm und 15 µm besonders geeignet, da die Transmission von Gläsern typischerweise vom sichtbaren Spektralbereich zum Infrarotbereich hin sinkt. Vorzugsweise wird die Wellenlänge des Lasers so gewählt, dass das Glas des zu bearbeitenden Glasgegenstandes bei der Wellenlänge einen Absorptionskoeffizienten von mindestens 300 m⁻¹, besonders bevorzugt mindestens 500 m⁻¹ aufweist. Bei einem Absorptionskoeffizienten von 300 m⁻¹ werden dann etwa 25% der Laserleistung beim Durchgang durch die Wandung eines Glasrohres mit 1 mm Wandstärke absorbiert. Bei einem Absorptionskoeffizienten von 500 m⁻¹ wird bereits etwa 40% des Lichts absorbiert und kann zur Erwärmung des Glaskörpers genutzt werden.

Im Allgemeinen sind für die Umformung von Glaskörpern Laser mit einer Strahlungsleistung kleiner 1 kW ausreichend, um eine hinreichend schnelle Erwärmung des Glases zu gewährleisten. Um die Temperatur während der Umformung zu halten, ist im Allgemeinen noch weniger Leistung erforderlich. Vielfach reicht dazu eine Strahlungsleistung von weniger als 200 Watt aus. Ein bevorzugter Bereich der eingestrahlten Leistung liegt zwischen 30 und 100 Watt. Für die Formung von größeren Glasgegenständen, beispielsweise die Formung von Glasgegenständen aus Glasrohr mit einem Durchmesser von 20 Millimetern oder mehr sind gegebenenfalls aber auch größere Leistungen günstig, um eine schnelle Erwärmung zu gewährleisten. Als Beispiel sei in diesem Zusammenhang die Formung des Flaschenhalses für Pharmafläschchen genannt.

Die Regelung der Laserleistung kann insbesondere auch anhand des eingestellten Temperaturprofils des Glasrohres 3 vorgenommen werden. Dazu kann in der Steuereinrichtung 13 ein Regelprozess implementiert sein, welcher die Laserleistung und die steuerbare Optik 6 anhand eines mittels einer Messeinrichtung gemessenen Temperaturprofils regelt, um ein vordefiniertes Temperaturprofil am Glaskörper einzustellen. Als derartige Messeinrichtung ist bei dem in Fig. 1 gezeigten Beispiel eine Wärmebildkamera 11 vorgesehen, welche die Wärmestrahlung des Glasrohres an dessen durch den Laser 5 erwärmten Bereich misst. Die Messwerte werden der Steuereinrichtung 13 zugeführt und im Regelprozess zur Einstellung des gewünschten Temperaturprofils verwendet.

Fig. 2 zeigt eine schematische Darstellung eines Querschnitts durch ein pharmazeutisches Packmittel aus Glas 4 mit einem durch Heißumformung ausgebildetem Hals 10 und einer Schulter 20 sowie einer Stirnseite 30. Bei dem dargestellten Packmittel handelt es sich um ein Rollrandfläschchen. Andere Packmittel unterscheiden sich davon in erster Linie durch die Abmessungen, die Ausführung des Kragens an der Stirnseite sowie durch die Ausführung des der Stirnseite gegenüberliegenden Endes des Packmittels. So sind Karpulen und Spritzen an dieser Seite offen ausgeführt, wobei Spritzen in der Regel an dieser Stelle zusätzlich eine Fingerauflage aufweisen. Ampullen werden dagegen nach der Befüllung an der Stirnseite durch ein Heißformgebungsverfahren verschlossen. Alle diese Packmittel haben jedoch zumindest gemeinsam, dass sie einen Hals 10 und eine Schulter 20 aufweisen.

In den Figuren 3A, 3B und 3C ist schematisch ein Ausschnitt des Schulter- 20 und Halsbereichs 10 eines umgeformten Glaskörpers gezeigt. Die Schulter 20 weist dabei nach der Umformung einen Schulterwinkel α auf, der sich aus dem Winkel zwischen der Tangente am Wendepunkt der Kontur der Schulter, dargestellt als gestrichelte Linie, sowie einer vertikalen Bezugslinie, ebenfalls dargestellt als gestrichelte Linie, ergibt. Dieser Schulterwinkel muss sowohl an der Innenseite als auch an der Außenseite eines umgeformten Glaskörpers genauen Vorgaben entsprechen. Im Falle von pharmazeutischen Packmitteln hängt beispielsweise vom Schulterwinkel an der Innenwand des Packmittels dessen Restentleerbarkeit ab. Gleichzeitig bewirkt eine Abweichung des Schulterwinkels an der Außenseite des Packmittels unter Umständen, dass Aufsätze wie beispielsweise Schraubdeckel, Kappen oder Spritzennadeln nicht nutzungsgemäß angebracht werden können. Fig. 3A zeigt ein Beispiel für einen vorgabengemäßen Schulterwinkel, im dargestellten Fall von weniger als 90°. Fig. 3B zeigt eine unerwünschte Fehlbildung durch Abweichung von diesem Winkel mit einem Schulterwinkel von nahezu 90° und Fig. 3C eine entsprechende schwere Fehlbildung mit einem Schulterwinkel größer als 90°, die durch Stauchung der Schulter während der Heißformgebung entstehen kann. Durch das erfindungsgemäße Verfahren wird das Auftreten solcher Fehler stark reduziert und mithin sogar vollständig ausgeschlossen.

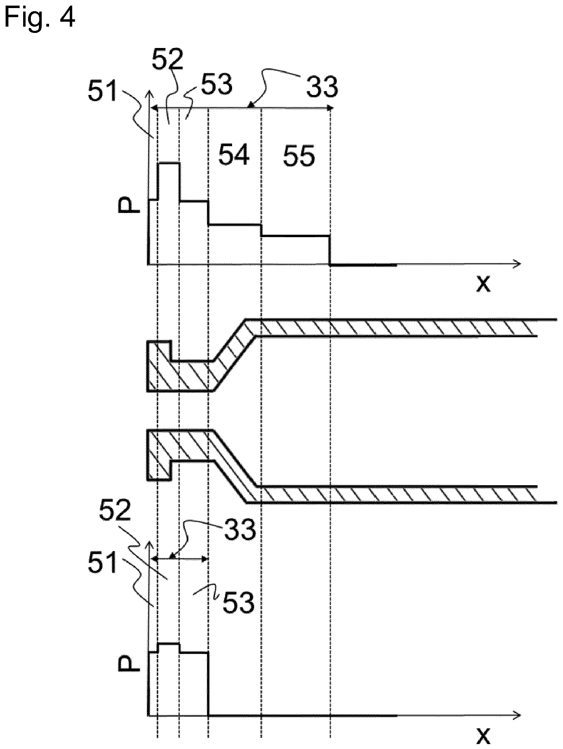

Fig. 4 zeigt zur Verdeutlichung zwei denkbare Ausführungen der Verteilung der Laserleistung P auf dem Glaskörper zur Einstellung des ersten beziehungsweise zweiten Temperaturprofils entlang des Glaskörpers in Richtung x.

Dargestellt ist jeweils ein Diagramm der Laserleistung P als Funktion der axialen Position x des Auftreffpunkts des Laserstrahls auf dem Glaskörper. Zum einfacheren Bezug der axialen Unterabschnitte der Laserleistung 51 bis 55 ist zwischen den Profilen schematisch ein Querschnitt durch einen umgeformten Glaskörper mit ausgebildetem Hals und Schulter dargestellt. Wie anhand des Diagramms zu erkennen ist, unterteilt sich der gesamte bestrahlte axiale Abschnitt 33 bei diesem Beispiel in Unterabschnitte 51, 52, 53, 54 und 55. Der Unterabschnitt 51 liegt dabei im Bereich der Stirnfläche des Glaskörpers, die Abschnitte 52 und 53 im Bereich des Halses, 54 im Bereich der Schulter und 55 im Bereich hinter der Schulter.

Für das erste Profil, dargestellt oben in Fig. 4, werden die Unterabschnitte 51 - 53 dabei beispielhaft mit höherer Leistung P des Lasers bestrahlt, als die Unterabschnitte 54 und 55. Eine derart in x-Richtung inhomogene Deposition der Laserleistung kann in mehrerer Hinsicht von Vorteil sein. Wird beispielsweise eine homogene Temperaturverteilung während des Umformprozesses angestrebt, wobei aber eine inhomogene Wärmeabfuhr erfolgt, kann durch eine Einstellung eines entsprechenden Profils der eingestrahlten Leistung P die Inhomogenität der Wärmeverluste zumindest teilweise kompensiert werden. Beispielsweise können Unterabschnitte des Glaskörpers, die zuerst oder länger mit dem radialen Formwerkzeug in Berührung kommen, entsprechend stärker über die Laserstrahlung erwärmt werden, um die am Formwerkzeug zusätzlich auftretenden Wärmeverluste zu kompensieren.

Andererseits kann über ein in x-Richtung inhomogenes Temperaturprofil der bei der Umformung auftretende Materialfluss über die Viskosität des Glases zusätzlich gesteuert werden. Typischerweise fließt das Glas unter Berücksichtigung des vom radialen Formwerkzeug ausgeübten Druckes oder Zugs tendenziell von wärmeren und damit weicheren Bereichen zu kälteren und damit zäheren Bereichen im Glaskörper. Eine vorteilhafte Möglichkeit ist etwa, in Bereichen, in welchen vom Formwerkzeug eine starke Verformung verursacht wird, eine damit verbundene Abnahme der Wandstärke eines Glasrohres zu reduzieren. Dies ist insbesondere bei starken Streckungen und Biegungen des Glasmaterials der Fall. Ebenfalls sehr vorteilhaft kann ein verstärkter Materialfluss induziert werden, wenn es aufgrund einer radialen Kompression eines Glasrohres zu einer Verdickung der Wandstärke kommt.

Es ist dem Fachmann ersichtlich, dass die Erfindung nicht auf die vorstehend anhand der Figuren beschriebenen lediglich beispielhaften Ausführungsformen beschränkt ist, sondern in vielfältiger Weise im Rahmen des Gegenstandes der Patentansprüche variiert werden kann. Insbesondere können auch die Merkmale einzelner Ausführungsbeispiele miteinander kombiniert werden.

So wurde die Erfindung in den Figuren anhand der Ausformung von pharmazeutischen Packmitteln beschrieben. Die Erfindung ist aber in entsprechender Weise auch auf die Umformung anderer Glaskörper anwendbar. Weiterhin ist die Verwendung des Lasers als Heizeinrichtung nicht ausschließlich. Vielmehr können zusätzlich auch andere Heizeinrichtungen Anwendung finden. So ist es möglich und aufgrund der hohen Heizleistung gegebenenfalls auch vorteilhaft, eine Vorerwärmung mit einem Brenner durchzuführen, um die anfängliche Aufheizdauer vor dem Umformprozess zu reduzieren.

### Bezugszeichenliste

- 1: Vorrichtung zum Umformen von Glaskörpern
- 3: Glaskörper, z.B. Glasrohr
- 4: Pharmazeutisches Packmittel aus Glas
- 5: Laser
- 6: Steuerbare Optik
- 9: Rotationseinrichtung
- 10: Hals eines umgeformten Glaskörpers
- 11: Wärmebildkamera
- 13: Steuereinrichtung
- 20: Schulter eines umgeformten Glaskörpers
- 30: Stirnseite eines umgeformten Glaskörpers
- 33: bestrahlter Bereich von 3
- 50: Laserstrahl
- 51-55: Unterabschnitte von 33
- 70, 71: Walzen des radialen Formwerkzeugs
- 80: Formdorn des axialen Formwerkzeugs
- 81: Fuß des axialen Formwerkzeugs

## Patentansprüche

1. Verfahren zum Umformen eines um seine Längsachse L rotierenden Glaskörpers (3) mittels
- einer Einrichtung zur Einstellung eines Temperaturprofils entlang der Längsachse L, die einen Laser (5) umfasst,
- eines radialen Formwerkzeugs, das radial zur Längsachse L verfahrbar ist,
- eines axialen Formwerkzeugs, das axial zur Längsachse L verfahrbar ist sowie
- einer Rotationseinrichtung (9), mit der der Glaskörper (3) rotiert werden kann,
wobei das Verfahren die folgenden Schritte in der angegeben Reihenfolge umfasst:
A. Einstellen eines ersten vordefinierten Temperaturprofils des Glaskörpers (3) entlang seiner Längsachse L mittels der Einrichtung zur Einstellung eines Temperaturprofils,
B. Umformen des rotierenden Glaskörpers durch Zustellen des radialen Formwerkzeugs, so dass eine Schulter (20) ausgebildet wird,
C. Einstellen eines zweiten vordefinierten Temperaturprofils des Glaskörpers (3) entlang seiner Längsachse L mittels der Einrichtung zur Einstellung eines Temperaturprofils, so dass die Viskosität des Glases im Bereich der Schulter (20) mindestens 10⁶ dPa s und höchstens 10¹³ dPa s beträgt und
D. Umformen des rotierenden Glaskörpers durch Zustellen des axialen Formwerkzeugs.

2. Verfahren nach Anspruch 1, **dadurch gekennzeichnet, dass** der rotierende Glaskörper (3) während den Verfahrensschritten B und/oder D wenigstens zeitweise mit der Laserstrahlung (50) der Einrichtung zur Einstellung eines axialen Temperaturprofils bestrahlt wird.

3. Verfahren nach Anspruch 1 oder 2, **dadurch gekennzeichnet, dass** das erste vordefinierte Temperaturprofil in einem Bereich von der Stirnseite (30) des Glaskörpers bis mindestens über die Position der auszubildenden Schulter (20) hinaus Temperaturen aufweist, so dass die Viskosität des Glases in diesem Bereich an jedem Punkt zwischen 10³ dPa s und 10^{7,6} dPa s beträgt und dahinter auf Raumtemperatur abfällt.

4. Verfahren nach einem der vorhergehenden Ansprüche, **dadurch gekennzeichnet, dass** das zweite vordefinierte Temperaturprofil zwischen Stirnseite (30) und Schulter (20) Temperaturen aufweist, so dass die Viskosität des Glases in diesem Bereich an jedem Punkt zwischen 10³ dPa s und 10^{7,6} dPa s, bevorzugt zwischen 10³ dPa s und 10⁶ dPa s beträgt, und im Bereich der Schulter (20) geringere Temperaturen aufweist, so dass die Viskosität des Glases im Bereich der Schulter (20) mindestens 10⁶ dPa s und höchstens 10¹³ dPa s, bevorzugt mindestens 10^{7,6} dPa s und höchstens 10¹³ dPa s beträgt und dahinter auf Raumtemperatur abfällt.

5. Verfahren nach einem der vorhergehenden Ansprüche, **dadurch gekennzeichnet, dass** das eingestellte Temperaturprofil entlang der Längsachse L des Glaskörpers (3) gemessen wird und die Leistungseinbringung mittels des Lasers (5) der Einrichtung zur Einstellung eines Temperaturprofils durch die Steuereinrichtung (13) so geregelt wird, dass Abweichungen zwischen dem gemessenen und einem vordefinierten Temperaturprofil minimiert werden.

6. Verfahren nach einem der vorhergehenden Ansprüche, **dadurch gekennzeichnet, dass** das radiale Formwerkzeug ein Walzenpaar (70,71) umfasst.

7. Verfahren nach einem der vorhergehenden Ansprüche, **dadurch gekennzeichnet, dass** das axiale Formwerkzeug einen Formdorn (80) und einen Fuß (81) umfasst, wobei zumindest der Fuß axial verfahrbar ist.

8. Verfahren nach einem der vorhergehenden Ansprüche, **dadurch gekennzeichnet, dass** zwischen den Prozessschritten B und C ein Abkühlschritt erfolgt, der bevorzugt wenigstens 0,01 s und höchstens 5 s, mehr bevorzugt wenigstens 0,1 s und höchstens 0,5 s und am meisten bevorzugt zwischen 0,2 s und 0,3 s dauert.

9. Verfahren nach einem der vorhergehenden Ansprüche, **dadurch gekennzeichnet, dass** die Verfahrensschritte A, B, C und D an derselben Maschinenstation stattfinden.

10. Verfahren nach einem der vorhergehenden Ansprüche, **dadurch gekennzeichnet, dass** zumindest für die Verfahrensschritte A und C, bevorzugt für die Verfahrensschritte A,B,C und D derselbe Laser (5)verwendet wird.

11. Verfahren nach einem der vorhergehenden Ansprüche, **dadurch gekennzeichnet, dass** zwischen den Verfahrensschritten A,B,C und D keine translatorische Bewegung des Glaskörpers stattfindet.

12. Verfahren nach einem der vorhergehenden Ansprüche, **dadurch gekennzeichnet, dass** der Glaskörper (3) als Glasrohr ausgebildet ist.

## Claims

1. Method for reshaping a glass body (3) rotating about its longitudinal axis L, by means of
- a means for establishing a temperature profile along the longitudinal axis L, comprising a laser (5),
- a radial forming tool, which is movable radially to the longitudinal axis L,
- an axial forming tool, which is movable axially to the longitudinal axis L, and
- a rotation means (9) with which the glass body (3) can be rotated,
the method comprising the following steps in the specified order:
A. establishing a first pre-defined temperature profile along the longitudinal axis L of the glass body (3), using the means for establishing a temperature profile,
B. reshaping the rotating glass body by engaging the radial forming tool, so that a shoulder (20) is formed,
C. establishing a second pre-defined temperature profile along the longitudinal axis L of the glass body (3) using the means for establishing a temperature profile, so that the viscosity of the glass in the region of the shoulder (20) is at least 10⁶ dPa s and at most 10¹³ dPa s, and
D. reshaping the rotating glass body by engaging the axial forming tool.

2. Method according to Claim 1, **characterized in that** during method steps B and/or D, the rotating glass body (3) is irradiated at least intermittently with the laser radiation (50) of the means for establishing an axial temperature profile.

3. Method according to Claim 1 or 2, **characterized in that** in a region from the end face (30) of the glass body up to at least beyond the position of the shoulder (20) to be formed, the first pre-defined temperature profile has temperatures such that the viscosity of the glass in this region at any point is between 10³ dPa s and 10^{7.6} dPa s and drops to room temperature thereafter.

4. Method according to any of the preceding claims, **characterized in that** the second pre-defined temperature profile between end face (30) and shoulder (20) features temperatures such that the viscosity of the glass in this region at any point is between 10³ dPa s and 10^{7.6} dPa s, preferably between 10³ dPa s and 10⁶ dPa s, and in the region of the shoulder (20) features lower temperatures, so that the viscosity of the glass in the region of the shoulder (20) is at least 10⁶ dPa s and at most 10¹³ dPa s, preferably at least 10 dPa s and at most 10¹³ dPa s, and drops to room temperature thereafter.

5. Method according to any of the preceding claims, **characterized in that** the temperature profile established is measured along the longitudinal axis L of the glass body (3), and the power input by means of the laser (5) of the means for establishing a temperature profile is regulated by the control means (13) in such a way as to minimize deviations between the measured temperature profile and a pre-defined temperature profile.

6. Method according to any of the preceding claims, **characterized in that** the radial forming tool comprises a pair of rolls (70, 71).

7. Method according to any of the preceding claims, **characterized in that** the axial forming tool comprises a forming mandrel (80) and a base (81), at least the base being movable axially.

8. Method according to any of the preceding claims, **characterized in that** between the operating steps B and C there is a cooling step which lasts preferably at least 0.01 s and at most 5 s, more preferably at least 0.1 s and at most 0.5 s and most preferably between 0.2 s and 0.3 s.

9. Method according to any of the preceding claims, **characterized in that** method steps A, B, C and D take place at the same machine station.

10. Method according to any of the preceding claims, **characterized in that** the same laser (5) is used at least for method steps A and C, preferably for method steps A, B, C and D.

11. Method according to any of the preceding claims, **characterized in that** there is no translational movement of the glass body between method steps A, B, C and D.

12. Method according to any of the preceding claims, **characterized in that** the glass body (3) is in the form of glass tubing.

## Revendications

1. Procédé de formage d'un corps en verre (3) rotatif sur son axe longitudinal L au moyen
- d'un dispositif destiné à régler un profil de température le long de l'axe longitudinal L et comprenant un laser (5),
- d'un outil de formage radial mobile radialement par rapport à l'axe longitudinal L,
- d'un outil de formage axial mobile axialement par rapport à l'axe longitudinal L et
- d'un dispositif de rotation (9) permettant de mettre en rotation le corps en verre (3),
le procédé comprenant les étapes suivantes dans l'ordre spécifié :
A. régler un premier profil de température prédéfini du corps en verre (3) le long de son axe longitudinal L au moyen du dispositif de réglage d'un profil de température,
B. mettre en forme le corps en verre rotatif par approche de l'outil de formage radial de manière à former un épaulement (20),
C. régler un deuxième profil de température prédéfini du corps en verre (3) le long de son axe longitudinal L au moyen du dispositif de réglage d'un profil de température de telle sorte que la viscosité du verre dans la région de l'épaulement (20) soit d'au moins 10⁶ dPa s et d'au plus 10¹³ dPa s et
D. mettre en forme le corps en verre rotatif par approche de l'outil de formage axial.

2. Procédé selon la revendication 1, **caractérisé en ce que**, au cours des étapes de procédé B et/ou D, le corps en verre (3) rotatif est au moins temporairement irradié par le rayonnement laser (50) du dispositif de réglage d'un profil de température axial.

3. Procédé selon la revendication 1 ou 2, **caractérisé en ce que**, dans une région allant de la face d'extrémité (30) du corps en verre à une position au moins au-delà de celle de l'épaulement (20) à former, le premier profil de température prédéfini a des températures telles que la viscosité du verre dans cette région est comprise entre 10³ dPa s et 10^{7,6} dPa s en chaque point et tombe ensuite à la température ambiante.

4. Procédé selon l'une des revendications précédentes, **caractérisé en ce que**, entre la face d'extrémité (30) et l'épaulement (20), le deuxième profil de température prédéfini a des températures telles que la viscosité du verre est, en chaque point dans cette région, d'au moins 10³ dPa s et d'au plus 10^{7,6} dPa s, de préférence entre 10³ dPa s et 10⁶ dPa s, et a dans la région de l'épaulement (20) des températures inférieures de sorte que la viscosité du verre dans la région de l'épaulement (20) est d'au moins 10⁶ dPa s et d'au plus 10¹³ dPa s, de préférence d'au moins 10^{7,6} dPa s et d'au plus 10¹³ dPa s et tombe ensuite à la température ambiante.

5. Procédé selon l'une des revendications précédentes, **caractérisé en ce que** le profil de température réglée est mesuré le long de l'axe longitudinal L du corps en verre (3) et la puissance fournie au moyen du laser (5) du dispositif de réglage d'un profil de température est réglée par le dispositif de commande (13) de manière à minimiser les écarts entre un profil de température mesuré et un profil de température prédéfini.

6. Procédé selon l'une des revendications précédentes, **caractérisé en ce que** l'outil de formage radial comprend une paire de rouleaux (70, 71).

7. Procédé selon l'une des revendications précédentes, **caractérisé en ce que** l'outil de formage axial comprend un mandrin de formage (80) et un pied (81), au moins le pied étant mobile axialement.

8. Procédé selon l'une des revendications précédentes, **caractérisé en ce qu'**une étape de refroidissement est effectuée entre les étapes de procédé B et C, de préférence d'au moins 0,01 s et d'au plus 5 s, plus préférablement d'au moins 0,1 s et d'au plus 0,5 s, le plus préférablement entre 0,2 s et 0,3 s.

9. Procédé selon l'une des revendications précédentes, **caractérisé en ce que** les étapes de procédé A, B, C et D sont effectuées au même poste de machine.

10. Procédé selon l'une des revendications précédentes, **caractérisé en ce que** le même laser (5) est utilisé au moins pour les étapes de procédé A et C, de préférence pour les étapes de procédé A, B, C et D.

11. Procédé selon l'une des revendications précédentes, **caractérisé en ce qu'**aucun mouvement de translation du corps en verre n'est effectué entre les étapes de procédé A, B, C et D.

12. Procédé selon l'une des revendications précédentes, **caractérisé en ce que** le corps en verre (3) est réalisé sous la forme d'un tube en verre.
